# EUROPÄISCHE PATENTSCHRIFT

(11) **EP 4 121 691 B1**
(45) Veröffentlichungstag und Bekanntmachung des Hinweises auf die Patenterteilung: **27.03.2024**
(21) Anmeldenummer: 21704408.0
(22) Anmeldetag: 21.01.2021
(51) Int. Cl.: F23D 14/48, F23D 14/78, F23D 14/22, F23L 7/00

(54) **WASSERSTOFFBRENNER UND VERFAHREN ZUM BETREIBEN EINES SOLCHEN WASSERSTOFFBRENNERS**
HYDROGEN BURNER AND METHOD FOR OPERATING A HYDROGEN BURNER OF THIS TYPE
BRÛLEUR À HYDROGÈNE ET PROCÉDÉ DE FONCTIONNEMENT D'UN BRÛLEUR À HYDROGÈNE DE CE TYPE

(30) Priorität: 29.04.2020 DE 102020205396
(43) Veröffentlichungstag der Anmeldung: 25.01.2023
(73) Patentinhaber: Siemens Energy Global GmbH & Co. KG, 81739 München (DE)
(72) Erfinder: HERTWIG, Holger, 02708 Großschweidnitz (DE)
(86) Internationale Anmeldenummer: PCT/EP2021/051299
(87) Internationale Veröffentlichungsnummer: WO 2021/219256

(56) Entgegenhaltungen:
- DE-A1- 2 933 932
- DE-A1- 3 700 233
- US-A- 5 058 808
- US-A1- 2006 053 791

## Beschreibung

Die Erfindung betrifft einen Wasserstoffbrenner nach dem Oberbegriff des unabhängigen Patentanspruchs 1 sowie ein Verfahren zum Betreiben eines solchen Wasserstoffbrenners nach dem Oberbegriff des unabhängigen Patentanspruchs 5.

Wasserstoff spielt bei der Energiespeicherung und der Energieumwandlung in elektrischen Strom zunehmen eine größere Rolle, insbesondere bei regenerativen Energien, bei denen sich der Zeitpunkt der Energiebereitstellung beispielsweise durch Wind oder Solarenergie nicht immer mit dem Zeitpunkt des Energiebedarfs deckt. Die regenerativ bereitgestellte Energie kann dabei dazu genutzt werden, mit Hilfe von Elektrolyse Wasser in Wasserstoff und Sauerstoff zu zerlegen und bis zum Bedarf an Elektrizität und/oder Wärme zwischenzuspeichern.

Wird die Energie benötigt, kann der Wasserstoff mit dem Sauerstoff in einem Wasserstoffbrenner durch Oxidation kontrolliert zur Reaktion gebracht werden. Ein solcher Wasserstoffbrenner ist beispielsweise aus der DE 29 33 932 A1 bekannt. Der Wasserstoffbrenner ist dabei so konzipiert, dass durch eine Stirnplatte mit wenigstens zwei Öffnungen, Wasserstoff und Sauerstoff in eine in Strömungsrichtung nachgeordnete Brennkammer eingespritzt und innerhalb der Brennkammer in Kontakt gebracht werden kann. Bei der Oxidation wird eine hohe thermische Energie freigesetzt, die zum Antreiben einer Expansionsmaschine (Turbomaschine, Kolbenmaschine) genutzt werden kann, die ihrerseits über einen Generator elektrischen Strom erzeugt.

Bei der Oxidation von Wasserstoff liegt die Flamme direkt an der Stirnplatte an und hebt im Gegensatz zu z.B. einem Erdgasbrenner nicht ab. Aus diesem Grund ist die Stirnplatte thermisch besonders beansprucht und muss dauerhaft gekühlt werden. Vor dem Starten des Wasserstoffbrenners ist zunächst die Kühlung in Betrieb zu nehmen und auf einwandfreie Funktion zu prüfen, andernfalls wird ein Totalverlust des Brenners riskiert.

Zur Kühlung der Stirnplatte, sieht die DE 29 33 932 A1 einen Kühlkanal in der Stirnplatte vor, welcher mit einem Kühlwassereintritt und einem Kühlwasseraustritt verbunden ist und durch welchen Kühlwasser hindurchgeleitet werden kann. Vom Kühlkanal führen Bohrungen in die Brennkammer, durch die Wasser in die Brennkammer gelangt.

Das Problem einer solchen Kühlung liegt darin, dass das Kühlwasser entweder den noch nicht gezündeten Wasserstoffbrenner in Richtung Turbine verlässt, sich dort sammelt und zu Schäden an der Turbine führt, oder im Wasserstoffbrenner verbleibt und dort beim Zünden durch eine schlagartige Verdampfung Schaden anrichtet. Beide Szenarien sind somit unter allen Umständen zu vermeiden.

Aufgabe der Erfindung ist es, die aus dem Stand der Technik bekannten Probleme zu beseitigen und einen Wasserstoffbrenner sowie ein Verfahren zum Betreiben eines solchen Wasserstoffbrenners bereitzustellen, bei dem eine sichere Kühlung der Stirnplatte des Wasserstoffbrenners garantiert ist.

Die Aufgabe wird hinsichtlich des Brenners durch die Merkmale des unabhängigen Patentanspruchs 1 gelöst. Bezüglich des Verfahrens wird die Aufgabe durch die Merkmale des unabhängigen Patentanspruchs 5 gelöst.

Der erfindungsgemäße Wasserstoffbrenner, umfassend eine Stirnplatte, sowie eine sich an die Stirnplatte anschließende Brennkammer, wobei in der Stirnplatte wenigstens eine erste Einlassöffnung zum Zuführen von Wasserstoff und wenigstens eine zweite Einlassöffnung zum Zuführen von Sauerstoff in die Brennkammer vorgesehen ist, und wobei die Stirnplatte ein Kühlsystem mit wenigstens einem Kühlkanal aufweist, welcher mit Wasser durchchströmbar ist und welcher an einem ersten Ende einen Kühlwassereintritt und an einem zweiten Ende einen Kühlwasseraustritt aufweist und wobei in der Stirnplatte wenigstens eine dritte Einlassöffnung zum Zuführen von Wasser in die Brennkammer vorgesehen ist und die dritte Einlassöffnung mit dem wenigstens einen Kühlkanal des Kühlsystems verbunden ist, zeichnet sich dadurch aus, dass innerhalb der dritten Einlassöffnung ein Ventil angeordnet ist.

Das Ventil verhindert, dass unkontrolliert Wasser über den Kühlkanal in die Brennkammer und ggf. in eine an die Brennkammer angeschlossen Turbine gelangen kann. Durch das Ventil kann der Brenner im Wesentlichen in zwei unterschiedlichen Betriebsmodi betrieben werden:
1. Das Ventil ist geschlossen, so dass das Wasser ausschließlich über den Kühlwassereintritt in den Kühlkanal eintreten und über den Kühlkanalaustritt austreten kann. Dieser Betriebsmodus kann als "geschlossene Betriebsweise" bezeichnet werden. Das Wasser übernimmt dabei ausschließlich die Kühlfunktion der Stirnplatte.
2. Das Ventil ist vollständig geöffnet, so dass das Wasser über den Kühlwassereintritt in den Kühlkanal eintreten und vollständig über die Düse und die dritte Einlassöffnung in die Brennkammer gelangen kann. Dieser Betriebsmodus kann als "offene Betriebsweise" bezeichnet werden. Dabei übernimmt das Wasser zunächst weiterhin die Kühlfunktion für die Stirnplatte bevor es in die Brennkammer gelangt, hierzu ist der Kühlkanal entsprechend geometrisch auszubilden, beispielsweise durch eine spiralförmige oder mäanderförmige Ausbildung innerhalb der Stirnplatte, so das eine vollständige Kühlung der Stirnplatte gewährleistet ist, bevor das Wasser in die Brennkammer gelangt.

Zusätzlich zu diesen beiden Betriebsmodi gibt es einen Übergangsbereich, bei dem das Ventil teilweise geöffnet, so dass ein Teil des Wassers über den Kühlwassereintritt in den Kühlkanal eintreten und über den Kühlkanalaustritt austreten kann und ein Teil des Wassers über das Ventil in die Brennkammer gelangt.

In den Betriebsmodi, bei denen das Ventil teilweise oder vollständig geöffnet ist, kann das Wasser neben der Kühlfunktion der Stirnplatte auch eine Konditionierungsfunktion des Brenndampf erfüllen.

Als Brenndampf ist dabei der Dampf zu verstehen, der bei der Oxidation von Wasserstoff mit Sauerstoff gebildet wird. Durch das Zuführen von Wasser, über die dritte Einlassöffnung wird die Temperatur des durch die Oxidation des Wasserstoffs mit Sauerstoff entstehenden Brenndampfs deutlich gesenkt, so dass der aus dem Wasserstoffbrenner austretende Dampf für die Entspannung in weiteren Turbomaschinen beispielsweise einer Dampfturbine geeignet ist. Durch das Zuführen des Wassers, welcher sich durch eine deutlich niedrigere Temperatur als der Brenndampf auszeichnet, sinkt nicht nur die Temperatur des sich aus dem Brenndampf und dem Wasser bildenden Dampfs, sondern der Druck des austretenden Dampfs steigt wesentlich an. Dieser Dampf kann vorteilhaft in einer Dampfturbine entspannt werden. Die Entspannung des Dampfs in einer Dampfturbine erlaubt im Gegensatz zu einer Entspannung in einer Gasturbine eine Entspannung bis auf Kondensationsbedingungen, d.h. bis in den Unterdruckbereich, hierdurch lassen sich wesentlich höhere Wirkungsgrade erzielen.

Eine Ausgestaltung der Erfindung sieht vor, dass das Ventil druckbetätig ausgebildet ist und durch den Druck in der Brennkammer steuerbar ist. Hierdurch kann auf eine aufwendige, teure und fehleranfällige Steuerungstechnik verzichtet werden. Da im Bereich der Stirnplatte sehr hohe thermische Belastungen vorliegen ist die Verwendung beispielsweise von elektromagnetisch oder piezo-aktorisch betätigten Düsen sehr problematisch.

Wir das Ventil als federbelastetes Ventil ausgebildet, kann der Öffnungsdruck einfach über eine geeignete Federkennline eingestellt werden.

Eine weitere Ausgestaltung der Erfindung sieht vor, dass das Ventil derart ausgebildet und angeordnet ist, dass es druckentlastet, die dritte Einlassöffnung verschließt. Hierdurch wird sichergestellt, dass das Wasser erst bei einem bestimmten, durch das Ventil vorgegebene Öffnungsdruck, in den Brennraum gelangt.

Eine weitere Ausgestaltung der Erfindung sieht vor, dass der Wasserstoffbrenner eine Pilotdüse zum Zünden des Brenners umfasst. Die Pilotdüse ermöglicht eine schonende Inbetriebnahme des Wasserstoffbrenner, wozu der Brenner beispielsweise bei atmosphärischem Druck an der Pilotdüse gezündet wird und der Druck anschließend mit einem gewissen Transienten gesteigert wird. Vor während und in einem ersten Zeitbereich nach dem Zünden der Pilotdüse wird die Stirnplatte in der geschlossenen Betriebsweise betrieben. Sobald die Pilotdüse stabil brennt wird schnellstmöglich in die offene Betriebsweise gewechselt.

Das erfindungsgemäße Verfahren zum Betreiben des oben näher beschriebenen Wasserstoffbrenners zeichnet sich durch die folgenden Verfahrensschritte aus:
- Zuführen von Wasser über den Kühlwassereintritt in den Kühlkanal und Abführen des Wassers über den Kühlwasseraustritt;
- Zünden des Wasserstoffbrenners;
- Nachfolgende Steigerung des Drucks bei dem die Verbrennung stattfindet;
- Selbstständiges öffnen des Ventils beim Erreichen eines festgelegenen Druckes in der Brennkammer durch den Druck innerhalb der Brennkammer;
- Einspritzen von Wasser aus dem Kühlkanal durch die dritte Einlassöffnung in die Brennkammer.

Durch das erfindungsgemäße Verfahren wird sichergestellt, dass vor dem Starten des Brenners, die Kühlung des Brenners, durch das durch den Kühlkanal strömende Wasser sichergestellt wird, so dass es nicht zu hitzebedingten Schäden am Brenner kommen kann. Gleichzeitig wird sichergestellt, dass das Wasser aus dem Kühlkanal erst dann in die Brennkammer eingespritzt wird, wenn der Brenner stabil brennt, was durch den ansteigenden Druck in der Brennkammer ohne zusätzliche Messtechnik ermittelt werden kann. Der Druck in der Brennkammer sorgt dann für das selbstständige Öffnen des Ventils, welches innerhalb der dritten Einlassöffnung angeordnet ist, so das Wasser über die dritte Einlassöffnung in die Brennkammer gelangt und zur Konditionierung des Wasserdampfes zur Verfügung steht.

Je nach Ventilstellung wird somit der Brenner in der "geschlossenen Betriebsweise", der "offenen Betriebsweise" oder in einem Teilastbetrieb betrieben, bei dem nur ein Teil des Wassers zum Konditionieren des Dampfes in die Brennkammer eingespritzt wird und der restliche Teil des Wasser über den Kühlwasseraustritt abfließt.

Eine Ausgestaltung des erfindungsgemäßen Verfahrens sieht vor, dass das Zünden des Wasserstoffbrenners mit Hilfe der Pilotzündkammer erfolgt. Die Pilotzündkammer umfasst eine Pilotdüse und ermöglicht eine schonendere Inbetriebnahme des Wasserstoffbrenners. Dabei wird der Verbrennungsvorgang zunächst in der Pilotzündkammer gestartet. Gleichzeitig wird gedrosselt Wasserstoff und Sauerstoff in die Brennkammer geleitet. Die heißen, aus der Pilotzündkammer in die Brennkammer eintretenden Verbrennungsgase entzünden dann das Wasserstoff-/Sauerstoffgemisch in der Brennkammer. Dabei kommt es allerdings nicht zu einem plötzlichen, sondern einem kontinuierlichen Druckanstieg in der Brennkammer, so dass eine Beschädigung der Brennkammer und einer nachgeschalteten Turbine vermieden wird. Sobald die Flamme in der Brennkammer stabil brennt kann die Gaszufuhr auf den Nennwert hochgefahren werden.

Nachfolgend werden weitere Ausgestaltungen der Erfindung anhand der Figuren erläutert. Es zeigt:
- Fig.1: Eine schematische Darstellung eines erfindungsgemä-ßen Wasserstoffbrenners in der Draufsicht;
- Fig.2: Eine Schnittdarstellung des in Fig. 1 dargestellten Wasserstoffbrenners entlang der Linie A-A;
- Fig.3 Eine Detailansicht des in der dritten Einlassöffnung, angeordnet Ventils.

Die Darstellungen sind nicht zwangsläufig maßstabsgerecht, sondern dienen nur der Veranschaulichung der Erfindung. Gleiche beziehungsweise funktionsgleiche baugleich sind Figur übergreifend mit den gleichen Bezugszeichen versehen.

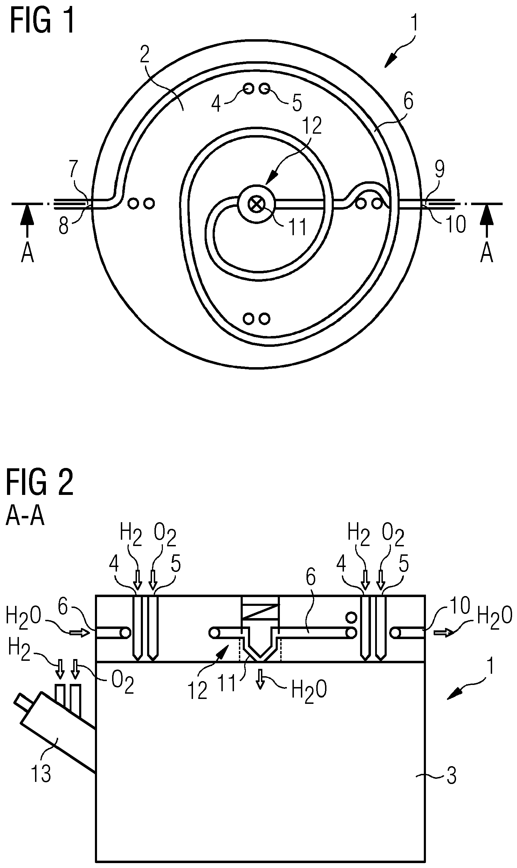

Fig. 1 zeigt eine schematisch und stark vereinfachte Darstellung eines erfindungsgemäßen Wasserstoffbrenners 1 in einer Draufsicht. Der Wasserstoffbrenner umfasst eine Stirnplatte 2 an die sich eine in Blickrichtung angeordnete Brennkammer 3 (siehe Fig.2) anschließt. Die Brennkammer umfasst des Weiteren eine Pilotzündkammer 13, die eine schonendere Inbetriebnahme des Wasserstoffbrenners 1 ermöglicht. Die Stirnplatte 2 ist im Ausführungsbeispiel rund ausgebildet, kann aber auch eine beliebig andere Form, beispielsweise eine quadratische oder echteckige Form, aufweisen. Die stirnplatte weist mehrere Brennereinheiten 14 auf. Jede Brennereinheit 14 umfasst eine erste Einlassöffnung 4 zum Zuführen von Wasserstoff und eine zweite Einlassöffnung 5 zum Zuführen von Sauerstoff in die Brennkammer 3. Statt einer Brennereinheit 14 können die erste und die zweite Einlassöffnung 4, 5 aus separat in die Stirnplatte 2 eingebracht sein.

Da bei einem Wasserstoffbrenner 1, wie schon beschrieben, die Flamme nicht von der Stirnplatte 2 abhebt, wirken hohe thermische Belastungen auf die Stirnplatte 3. Damit die thermischen Belastungen nicht zu einer Beschädigung der Stirnplatte 2 führen, muss diese stehts gekühlt werden. Hierzu ist in der Stirnplatte 2 ein Kühlsystem ausgebildet. Das Kühlsystem weist im Ausführungsbeispiel einen Kühlkanal 6 auf, welcher mit Wasser durchströmbar ausgebildet ist. Hierzu weißt der Kanal an einem ersten Ende 7 einen Kühlwassereintritt 8 und an einem zweiten Ende 9 einen Kühlwasseraustritt 10 auf, so dass das Wasser am Kühlmitteleintritt 8 in die Stirnplatte 2 einströmen und diese am Kühlmittelaustritt 10 wieder verlassen kann. Der Kühlkanal 6 ist so anzuordnen, dass die gesamte Stirnplatte hinreichend gekühlt werden kann. Im Ausführungsbeispiel ist der Kühlkanal 6 beispielsweise spiralförmig ausgebildet. Je nach Größe und Form der Stirnplatte sowie der thermischen Belastung können auch mehrere Kühlkanäle vorgesehen werden.

Die Stirnplatte 2 weist eine dritte Einlassöffnung 11 auf, durch die Wasser aus dem Kühlkanal 6 in die Brennkammer 3 eingespritzt werden kann. In der dritten Einlassöffnung 11 ist ein Ventil 12 angeordnet, mit dessen Hilfe, der Zufluss in den Brennkammer 3 geregelt werden kann. Hierdurch können die Probleme die bislang bei Wasserstoffbrennern aufgetreten sind, nämlich, dass das Kühlwasser entweder den noch nicht gezündeten Wasserstoffbrenner in Richtung Turbine verlässt, sich dort sammelt und zu Schäden an der Turbine führt, oder im Wasserstoffbrenner verbleibt und dort beim Zünden durch eine schlagartige Verdampfung Schaden anrichtet, wirkungsvoll verhindert werden. Der erfindungsgemäße Wasserstoffbrenner sowie das entsprechende erfindungsgemäße Verfahren zum Betreiben eines solchen Wasserstoffbrenners sorgen somit für eine erhöhte Betriebssicherheit.

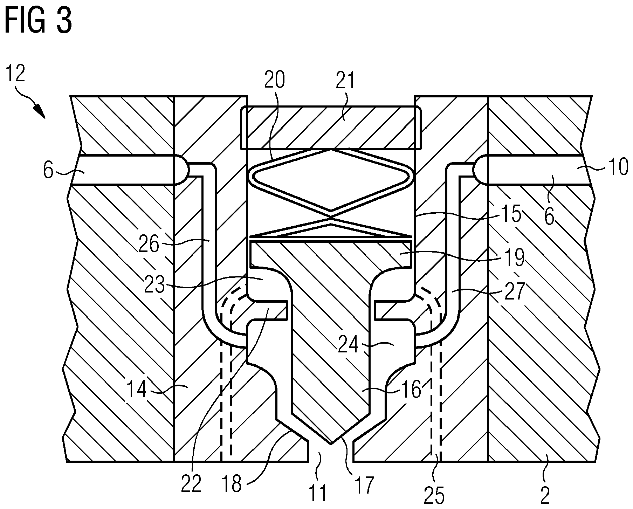

Fig. 2 zeigt eine Schnittdarstellung des in Fig. 1 dargestellten Wasserstoffbrenners 1 entlang der Linie A-A. In dieser Ansicht ist gut die sich an die Stirnplatte 2 anschließende Brennkammer 3 zu erkennen, in der der Sauerstoff mit dem Wasserstoff zur Oxidation (Verbrennung) gebracht werden. Hierzu wir durch erste Einlassöffnungen 4 Wasserstoff und durch zweite Einlassöffnungen 5 Sauerstoff in die Brennkammer 3 eingeleitet. Die Flammen, die bei der Verbrennung an den einzelnen Brennereinheiten 14 entstehen, sitzen direkt auf der Stirnplatte 2, wodurch diese thermisch stark belastet wird. Die Kühlung der Stirnplatte 2, mittels des in der Stirnplatte 2 integrierten Kühlsystems, umfassend den spiralförmig angeordneten Kühlkanals 6, welcher mit Wasser durchströmbar ist, sorgt dafür, dass die thermische Belastung einen zulässigen Wert nicht übersteigt. Hierdurch können Schäden durch eine thermische Überlastung am Sauerstoffbrenner 1 und insbesondere an der Stirnplatte 2 wirkungsvoll vermieden werden. Das Wasser aus dem Kühlkanal 6 kann über des Ventil 12 durch die dritte Einlassöffnung in die Brennkammer 3 eingespritzt und dort zum Konditionieren des bei der Verbrennung vom Wasserstoff mit dem Sauerstoff entstehenden Brenngases genutzt werden. Der genaue Aufbau und die Funktionsweise eines Ausführungsbeispiels eines solchen Ventils 12 ist in Fig. 3 näher erläutert.

Die der Brennkammer 3 zugehörige Pilotzündkammer 13 ermöglicht eine schonendere Inbetriebnahme des Wasserstoffbrenners 1. Dabei wird der Verbrennungsvorgang zunächst in der Pilotzündkammer 13 gestartet. Gleichzeitig wird gedrosselt Wasserstoff und Sauerstoff in die Brennkammer geleitet. Die heißen, aus der Pilotzündkammer in die Brennkammer eintretenden Verbrennungsgase entzünden dann das Wasserstoff-/Sauerstoffgemisch in der Brennkammer. Dabei kommt es allerdings nicht zu einem plötzlichen, sondern einem kontinuierlichen Druckanstieg in der Brennkammer, so dass eine Beschädigung der Brennkammer und einer nachgeschalteten Turbine vermieden wird.

Fig. 3 zeigt eine Detailansicht eines Ausführungsbeispiels, eines in der dritten Einlassöffnung 11, angeordnet Ventils 12. Nachfolgend soll dessen Aufbau näher erläutert werden. Das Ventil 12 ist als druckbetätigtes Ventil ausgebildet und umfasst ein Ventilgehäuse 14, in dem, innerhalb einer im Ventilgehäuse 14 ausgebildeten Ventilbohrung 15, axialbeweglich ein Ventilnadel 16 angeordnet ist. Die Ventilnadel 16 weist eine Ventilspitze 17 auf, mit der die Ventilnadel 16 im geschlossenen Zustand in einem Ventilsitz 18, welcher im Ventilgehäuse 14 ausgebildet ist, anliegt und die dritte Einlassöffnung 11 verschließt. An dem der Ventilspitze 17 gegenüberliegenden Seite der Ventilnadel 16 weist die Ventilnadel 16 einen Ventilteller 19 auf. Eine Ventilfeder 20 stützt sich mit einem ersten Ende gegen die Außenseite des Ventiltellers 19 und mit einem zweiten Ende gegen eine im Ventilgehäuse 14 eingeschraubte Einstellmutter 21 ab. Durch ein Verstellen der Einstellmutter 21 kann die Federvorspannung und damit der notwendige Öffnungsdruck des Ventils 12 eingestellt werden. Die Ventilfeder 20 drückt dabei die Ventilspitze 17 gegen den Ventilsitz 17. Druckentlastet, liegt die Ventilnadel 16 im Ventilsitz 18 und verschließt die dritte Einlassöffnung 11. Durch einen Vorsprung 22 im Ventilgehäuse 14 werden zwischen dem Ventilgehäuse 1 und der Ventilnadel 16 zwei Druckräume ausgebildet, ein erster Druckraum 23, welcher in axialer Richtung durch den Ventilteller 19 auf der einen und den Vorsprung 22 auf der anderen Seite begrenzt wird und einen zweiten Druckraum 24, welcher auf der einen Seite durch den Vorsprung 22 und auf der anderen Seite, im geschlossenen Zustand, durch die Ventilspitze 17 und den Ventilsitz 18 begrenzt wird.

Der erste Druckraum ist über wenigstens eine Druckleitung 24 mit dem Brennraum 3 verbunden. Im Ausführungsbeispiel sind zwei Druckleitungen 24 vorgesehen. Der zweite Druckraum 24 ist mit dem Kühlkanal 6 verbunden, wobei über eine Zuführleitung 26 das Kühlwasser vom Kühlkanal 6 in den zweiten Druckraum 24 ein- und über eine Abführleitung 26 aus dem zweiten Druckraum 24 in den Kühlkanal 6 abfließen kann.

Nachfolgend wir das Verfahren zum Betreiben des Wasserstoffbrenners 1 in Zusammenschau mit den Fig. 1 bis 3 erläutert. Bevor der Wasserstoffbrenner gestartet wird, d.h. bevor der Wasserstoff durch die erste Einlassöffnung 4 und der Sauerstoff durch die zweite Einlassöffnung 5 in den Brennraum eingeleitet und zur Oxidation gebracht wird, wird das Kühlsystem gestartet. Hierzu wird Wasser durch den Kühlwassereintritt 8 in den Kühlkanal 6 des Kühlsystems eingeleitet. Das durchströmt den Kühlkanal und verlässt den Kühlkanal 6 über den Kühlwasseraustritt 10. Der Druck im Brennraum entspricht zu diesem Zeitpunkt in etwa dem atmosphärischen Druck, dieser Druck reicht nicht aus, um das Ventil 12 gegen den Druck der Ventilfeder 20 zu öffnen und die dritte Einlassöffnung 11 frei zu geben so dass das Wasser aus dem Kühlkanal 6 in den Brennraum 3 gelangen kann. Das Wasser fließt stattdessen über die Zuführleitung 26 in den zweiten Druckraum 24 des Ventils 12 und von dort aus über die Abführleitung zurück in den Kühlkanal 6.

Sobald das Kühlsystem vollständig gestartet und die Kühlung der Stirnplatte 2 sichergestellt ist wird der Wasserstoffbrenner 1 gestartet. Das Starten des Wasserstoffbrenners 1 erfolgt dabei mit Hilfe der Pilotzündkammer 13. Hierzu wird über separate Zuleitungen Wasserstoff und Sauerstoff in die Pilotzündkammer 13 eingeleitet und zur Oxidation gebracht. Gleichzeitig wird gedrosselt Wasserstoff und Sauerstoff über die erste und zweite Einlassöffnung 4, 5 in die Brennkammer 3 geleitet. Die heißen, aus der Pilotzündkammer 13 in die Brennkammer 3 eintretenden Verbrennungsgase entzünden dann das Wasserstoff-/Sauerstoffgemisch in der Brennkammer 3. Dabei kommt es allerdings nicht zu einem plötzlichen, sondern einem kontinuierlichen Druckanstieg in der Brennkammer 3, so dass eine Beschädigung der Brennkammer und einer nachgeschalteten Turbine vermieden wird. Durch den Druckanstieg in der Brennkammer 3steigt der Druck innerhalb des ersten Druckraums 23 an und das Ventil 12 öffnet, d.h. die Ventilspitze 17 hebt vom Ventilsitz 18 ab und Wasser kann vom Kühlkanal 6 durch die dritte Einlassöffnung 11 in den Brennraum 3 gelangen und dort Konditionierungsaufgaben wahrnehmen.

Das Ventil 12 gewährleistet dabei, dass erst dann Wasser vom Kühlkanal 6 in den Brennraum 3 gelangen kann, wenn der Wasserstoffbrenner 1 stabil läuft. Damit wird verhindert, dass das Kühlwasser den noch nicht gezündete oder noch nicht stabil laufenden Wasserstoffbrenner 1 in Richtung Brennkammer 3 und einer nachgeordneten Turbine verlässt, sich dort sammelt und zu Schäden an der Turbine führt, oder das Wasser im Wasserstoffbrenner 1 verbleibt und dort beim Zünden durch die zu erwartende, schlagartige Verdampfung Schaden anrichtet. Der erfindungsgemäße Wasserstoffbrenner 1 sowie das erfindungsgemäße Verfahren zum Betreiben des Wasserstoffbrenners 1 tragen somit zu einer erhöhten Betriebssicherheit bei.

## Patentansprüche

1. Wasserstoffbrenner (1), umfassend eine Stirnplatte (2) sowie eine sich an die Stirnplatte (2) anschließende Brennkammer (3), wobei in der Stirnplatte (2) wenigstens eine erste Einlassöffnung (4) zum Zuführen von Wasserstoff und wenigstens eine zweite Einlassöffnung (5) zum Zuführen von Sauerstoff in die Brennkammer (3) vorgesehen ist,
und wobei die Stirnplatte (2) ein Kühlsystem mit wenigstens einem Kühlkanal (6) aufweist, welcher mit Wasser durchchströmbar ist und welcher an einem ersten Ende (7) einen Kühlwassereintritt (8) und an einem zweiten Ende (9) einen Kühlwasseraustritt (10) aufweist
und wobei in der Stirnplatte (2) wenigstens eine dritte Einlassöffnung (11) zum Zuführen von Wasser in die Brennkammer (3) vorgesehen ist und die dritte Einlassöffnung (11) mit dem wenigstens einen Kühlkanal (6) des Kühlsystems verbunden ist
**dadurch gekennzeichnet, dass**
innerhalb der dritten Einlassöffnung (11) ein Ventil (12) angeordnet ist.

2. Wasserstoffbrenner (1) nach Anspruch 1,
**dadurch gekennzeichnet, dass**
das Ventil (12) druckbetätig ausgebildet ist und durch den Druck in der Brennkammer (3) steuerbar ist.

3. Wasserstoffbrenner (1) nach Anspruch 2,
**dadurch gekennzeichnet, dass**
das Ventil (12) derart ausgebildet und angeordnet ist, dass es druckentlastet, die dritte Einlassöffnung (11) verschließt.

4. Wasserstoffbrenner (1) nach einem der Ansprüche 1 bis 3,
**dadurch gekennzeichnet, dass**
der Wasserstoffbrenner (1) eine Pilotzündkammer (13) zum Zünden des Wasserstoffbrenner (1) umfasst.

5. Verfahren zum Betreiben eines Wasserstoffbrenner (1) nach einem der Ansprüche 1 bis 3, umfassend folgende Verfahrensschritte:
- Zuführen von Wasser über den Kühlwassereintritt (8) in den Kühlkanal (6) und Abführen des Wassers über den Kühlwasseraustritt (10);
- Zünden des Wasserstoffbrenners (1);
- Nachfolgende Steigerung des Drucks bei dem die Verbrennung stattfindet;
- Selbstständiges öffnen des Ventils (12) beim Erreichen eines festgelegenen Druckes in der Brennkammer (3) durch den Druck innerhalb der Brennkammer (3);
- Einspritzen von Wasser aus dem Kühlkanal (6) durch die dritte Einlassöffnung (11) in die Brennkammer (3) .

6. Verfahren zum Betreiben eines Wasserstoffbrenner (1) nach Anspruch 5, wobei das Zünden des Wasserstoffbrenners (1) mit Hilfe der Pilotzündkammer (13) erfolgt.

## Claims

1. Hydrogen burner (1) comprising an end plate (2) and a combustion chamber (3) which adjoins the end plate (2), wherein provided in the end plate (2) are at least one first inlet opening (4) for feeding hydrogen and at least one second inlet opening (5) for feeding oxygen into the combustion chamber (3), and wherein the end plate (2) has a cooling system with at least one cooling duct (6) which is able to be passed through by a flow of water and which at a first end (7) has a cooling water inflow (8) and at a second end (9) has a cooling water outflow (10) ;
and wherein provided in the end plate (2) is at least one third inlet opening (11) for feeding water into the combustion chamber (3), and the third inlet opening (11) is connected to the at least one cooling duct (6) of the cooling system,
**characterized in that**
a valve (12) is disposed within the third inlet opening (11).

2. Hydrogen burner (1) according to Claim 1,
**characterized in that**
the valve (12) is configured to be activated by pressure and is able to be controlled by the pressure in the combustion chamber (3) .

3. Hydrogen burner (1) according to Claim 2,
**characterized in that**
the valve (12) is configured and disposed in such a manner that said valve (12), when relieved of pressure, closes the third inlet opening (11).

4. Hydrogen burner (1) according to one of Claims 1 to 3, **characterized in that**
the hydrogen burner (1) comprises a pilot ignition chamber (13) for igniting the hydrogen burner (1).

5. Method for operating a hydrogen burner (1) according to one of Claims 1 to 3, comprising the following method steps:
- feeding water by way of the cooling water inlet (8) into the cooling duct (6), and discharging the water by way of the cooling water outlet (10);
- igniting the hydrogen burner (1);
- subsequently increasing the pressure at which the combustion takes place;
- automatically opening the valve (12) by the pressure within the combustion chamber (3) once reaching a specified pressure in the combustion chamber (3);
- injecting water from the cooling duct (6) through the third inlet opening (11) into the combustion chamber (3).

6. Method for operating a hydrogen burner (1) according to Claim 5, wherein igniting the hydrogen burner (1) takes place with the aid of the pilot ignition chamber (13).

## Revendications

1. Brûleur (1) à hydrogène, comprenant une plaque (2) frontale ainsi qu'une chambre (3) de combustion se rattachant à la plaque (2) frontale, dans lequel il est prévu dans la plaque (2) frontale au moins une première ouverture (4) d'entrée pour l'apport d'hydrogène et au moins une deuxième ouverture (5) d'entrée pour l'apport d'oxygène dans la chambre (3) de combustion et dans lequel la plaque (2) frontale a un système de refroidissement ayant au moins un conduit (6) de refroidissement, dans lequel de l'eau peut passer, et qui a, à une première extrémité (7), une entrée (8) d'eau de refroidissement et à une deuxième extrémité (9) une sortie (10) d'eau de refroidissement, et dans lequel il est prévu dans la plaque (2) frontale au moins une troisième ouverture (11) d'entrée pour l'apport d'eau à la chambre (3) de combustion et la troisième ouverture (11) d'entrée est reliée au au moins un conduit (6) de refroidissement du système de refroidissement,
**caractérisé en ce que**
une soupape (12) est montée dans la troisième ouverture (11) d'entrée.

2. Brûleur (1) à hydrogène suivant la revendication 1,
**caractérisé en ce que**
la soupape (12) est constituée de manière à être actionnée par la pression et peut être commandée par la pression dans la chambre (3) de combustion.

3. Brûleur (1) à hydrogène suivant la revendication 2,
**caractérisé en ce que**
la soupape (12) est constituée et montée de manière à, lorsqu'elle est déchargée en pression, fermer la troisième ouverture (11) d'entrée.

4. Brûleur (1) à hydrogène suivant l'une des revendications 1 à 3,
**caractérisé en ce que**
le brûleur (1) à hydrogène comprend une chambre (13) pilote d'allumage pour l'allumage du brûleur (1) à hydrogène.

5. Procédé pour faire fonctionner un brûleur (1) à hydrogène suivant l'une des revendications 1 à 3, comprenant les stades de procédé suivants :
- envoi d'eau par l'entrée (8) d'eau de refroidissement dans le conduit (6) de refroidissement et évacuation de l'eau par la sortie (10) d'eau de refroidissement ;
- allumage du brûleur (1) à hydrogène ;
- élévation ensuite de la pression à laquelle la combustion a lieu ;
- ouverture automatique de la soupape (12), lorsqu'une pression fixée est atteinte dans la chambre (3) de combustion, par la pression à l'intérieur de la chambre (3) de combustion ;
- injection d'eau du conduit (6) de refroidissement dans la chambre (3) de combustion par la troisième ouverture (11) d'entrée.

6. Procédé pour faire fonctionner un brûleur (1) à hydrogène suivant la revendication 5, dans lequel
l'allumage du brûleur (1) à hydrogène s'effectue à l'aide de la chambre (13) pilote d'allumage.
